Europäisches Patentamt

(19) European Patent Office

Office européen des brevets

(11) Veröffentlichungsnummer : **0 336 181 B1**

# (12) EUROPÄISCHE PATENTSCHRIFT

(45) Veröffentlichungstag der Patentschrift :
08.01.92 Patentblatt 92/02

(51) Int. Cl.⁵ : **F16B 39/30, F16B 39/00**

(21) Anmeldenummer : **89104877.9**

(22) Anmeldetag : **18.03.89**

(54) Selbstsperrende Schraube.

(30) Priorität : **06.04.88 DE 3811504**

(43) Veröffentlichungstag der Anmeldung :
**11.10.89 Patentblatt 89/41**

(45) Bekanntmachung des Hinweises auf die
Patenterteilung :
· **08.01.92 Patentblatt 92/02**

(84) Benannte Vertragsstaaten :
**AT CH DE ES FR GB LI**

(56) Entgegenhaltungen :
**DE-A- 2 157 373
FR-A- 2 073 883
FR-A- 2 162 978**

(73) Patentinhaber : **OBERBERGISCHE
SCHRAUBENFABRIK R.A. JÜRGES GMBH &
CO. KG
Ösinghausen
W-5250 Engelskirchen (DE)**

(72) Erfinder : **Prinz, Dieter
Zum Sportplatz 17a
W-5270 Gummersbach-Bünghausen (DE)**

(74) Vertreter : **Hassler, Werner, Dr.
Postfach 17 04 Asenberg 62
W-5880 Lüdenscheid (DE)**

Jouve, 18, rue Saint-Denis, 75001 PARIS

## Beschreibung

Die Erfindung betrifft eine selbstsperrende Schraube mit partieller Verformung von Gewindegängen, wobei mindestens ein Gewindegang gegenüber der Schraubenlinie des Gewindes eine abbrechende Versetzung einer Flanke und der Kantenlinie aufweist.

Anwendungsgebiete der Erfindung sind insbesondere Klemmenschrauben für elektrische Anschlußklemmen oder andere Anschlußverschraubungen.

Selbstsperrende Schrauben sind in zahlreichen Ausführungsformen bekannt. Eine partielle Verformung eines Gewindeganges sieht eine Prägung vor, so daß der Kantenbereich plattgedrückt wird und mehr oder minder ausgeprägte Schneidkanten entstehen, die sich in das Muttergewinde eingraben. Hierdurch erhält man eine erhebliche Beeinträchtigung des Muttergewindes, so daß dadurch die ordnungsgemäße Funktion des Muttergewindes nicht mehr gewährleistet ist. Eine Schraube der eingangs genannten Art ist aus der DE-U-8319036 bekannt.

Aufgabe der Erfindung ist die Bereitstellung einer selbstsperrenden Schraube, die sich in ein Muttergewinde ohne Verformung desselben einschrauben läßt und einen erheblichen Widerstand gegen ein Zurückdrehen sicherstellt.

Diese Aufgabe wird nach der Erfindung dadurch gelöst, daß zwei benachbarte Gewindegänge gegensinnig zueinander jeweils eine linear zunehmende Versetzung der Flanken aufweisen, wobei der Abstand der Kantenlinien entgegen der Einschraubrichtung zunimmt.

Die Erfindung unterscheidet sich insofern vom Stand der Technik, als eine gleichmäßige Verformung des Gewindegangs vorgesehen ist, so daß zwar beim Einschrauben in das Muttergewinde eine allmähliche Erhöhung des Widerstandes eintritt, ohne daß jedoch eine Schneidwirkung auf das Muttergewinde ausgeübt wird. Die gegensinnig zueinander linear verformten Gewindegänge werden durch den Eingriff des Muttergewindes wieder soweit zurückgestellt, daß das Schraubengewinde unter Reibschluß durch das Muttergewinde hindurchgleitet. Nach vollständigem Durchtritt durch das Muttergewinde stellt die Verformung einem Zurückdrehen der Schraube einen erheblichen Widerstand entgegen. Dieser Widerstand ist vor allem deshalb sehr hoch, weil der Abbruch der Versetzung sehr steil ist, so daß dort ein hoher Widerstand gegeben ist. Die Schraube ist dadurch soweit gesichert, daß sie sich nicht unbeabsichtigt lösen kann. Infolgedessen können sich Klemmenschrauben nach dem Einschrauben in das Muttergewinde nicht mehr lösen, auch wenn kein elektrischer Anschlußdraht eingeklemmt ist.

Die Ausbildung der Verformung läßt sich bei der Herstellung der Schraube besonders wirtschaftlich herstellen, indem unmittelbar im Anschluß an das der Gewinderolle gegenüberstehende Segment ein Dorn angeordnet ist, der bei der Auslaufbewegung der Schraube in den Gewindegang eingedrückt wird. Man kann durch Einstellung des Dornes die Verformung dem jeweiligen Anwendungszweck anpassen. Die Verformungen wirken auf benachbarte Gewindegänge des Muttergeindes mit gegensinniger Wirkung. Hierdurch werden einseitige Belastungen oder Verformungen vermieden.

Einen besonders günstigen Kräfteverlauf bei Einschrauben erzielt man dadurch, daß das Versetzungsprofil der Kantenlinien einen sägezahnartigen Verlauf hat.

Eine besonders wirkungsvolle Selbstsperrung erreicht man mit einer solchen Profilform, daß die jeweils einander zugewandten Flanken der Verformungen gegenüber dem normalen Flankenverlauf abgeflacht und die jeweils äußeren Flanken der Versetzungsabschnitte aufgesteilt sind.

Das Sperrmoment ist dadurch besonders groß, daß die äußeren Flanken der Verformungen mindestens in dem Bereich vor dem Abbruch der Versetzung einen Überhang aufweisen.

Eine Ausführungsform der Erfindung wird im folgenden unter Bezugnahme auf die anliegende Zeichnung erläutert, in der darstellen :

Fig. 1    eine Schraube in der Ansicht und
Fig. 2    einen Teilschnitt nach der Linie II-II in Fig. 1.

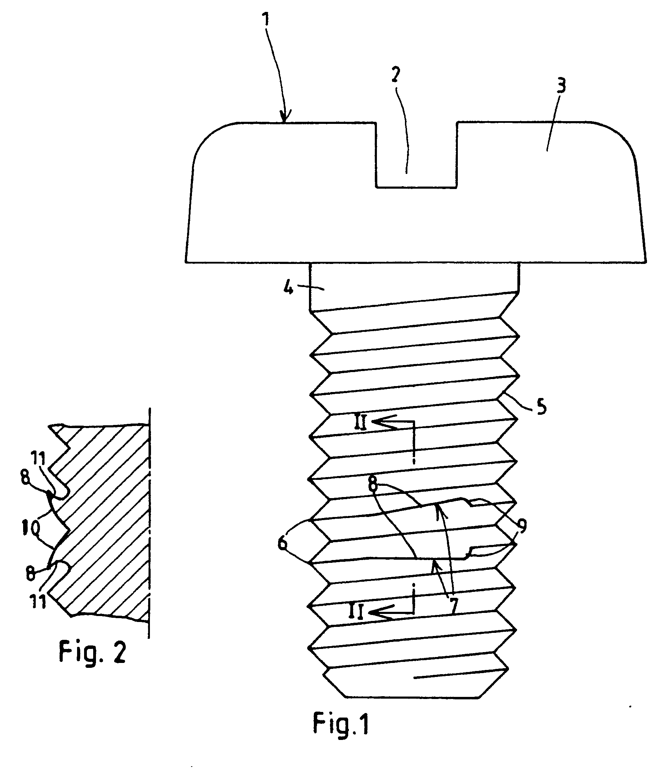

Fig. 1 zeigt eine Zylinderschraube 1 mit Schlitz 2 innerhalb des Zylinderkopfes 3. Der Schraubenschaft 4 weist ein genormtes Gewinde 5 auf. Eine solche Zylinderschraube 1 findet als Klemmenschraube Anwendung. Die Zylinderschraube wird in den Gewindedurchgang einer Klemme eingeschraubt und klemmt mit dem Fuß des Schraubenschaftes einen Anschlußdraht fest. Solange in vormontiertem Zustand der Zylinderschraube noch keine elektrische Anschlußleitung eingeklemmt ist, soll eine Sicherung und Sperrung gegen ein unbeabsichtigtes Lösen und damit Verlorengehen der Zylinderschraube gewährleistet sein.

Zwei benachbarte Gewindegänge 6 weisen in einem Teilbereich jeweils eine Verformung 7 auf, wobei die Verformungen 7 der beiden Gewindegänge 6 symmetrisch zueinander ausgebildet sind. Entgegen der Einschraubrichtung ist der Schraubengang linear zunehmend versetzt. Diese Versetzung ist so ausgebildet, daß die einander zugewandten Flanken 10 einen zunehmend flacheren Verlauf erhalten und die äußeren Flanken 11 entsprechend aufgesteilt werden. Die Kantenlinien 8 verlaufen linear, wobei der Abstand der Kantenlinien 8 voneinander zunehmend größer wird. Die Verformung weist am Ende einen steilen Abbruch 9 auf. Die Verformung der Flanken 10, 11 und der Kantenlinien 8 erkennt man besonders gut aus dem Schnittbild der Fig. 2. Die äußeren Flanken 11 sind insbesondere im Endabschnitt der Verformung sowie aufgesteilt, daß sie ein überhängendes Profil haben.

Diese Verformungen 7 lassen sich im Zuge der Gewindeformung ohne zusätzlichen Arbeitsgang herstellen. Im Anschluß an das der Gewinderolle gegenüberstehende Segment ist ein einstellbarer Dorn angeordnet, der in das Schraubengewinde unmittelbar nach der Endformung desselben eingedrückt wird. Der Dorn läßt sich genau einstellen, so daß die beschriebene Verformung in der gewünschten Größe erzeugt werden kann.

Diese symmetrische Verformung mit sich linear vergrößerndem gegenseitigem Abstand der Kantenlinien 8 bewirkt beim Eingriff der Zylinderschraube 1 in ein Muttergewinde einen zunehmenden Widerstand, wenn die Verformungen 7 in das Muttergewinde eintreten. Da die Kantenlinien 8 linear verformt sind und unter einem kleinen Winkel gegenüber der Schraubenlinie verlaufen, werden die Verformungen 7 beim Einschrauben soweit zurückgebildet, daß das Schraubengewinde durch das Muttergewinde hindurchtreten kann. Nachdem die Verformungen 7 durch den Gewindedurchgang des Muttergewindes hindurchgetreten sind, ist der restliche Teil des Schraubengewindes wieder innerhalb des Muttergewindes frei drehbar. Die Verformungen stellen jedoch einer Rückdrehung einen erheblichen Widerstand entgegen und bewirken unter normalen Belastungsverhältnissen eine Selbstsperrung. Denn jetzt kommen die steilen Kanten des Abbruchs 9 mit dem Muttergewinde in Eingriff, was einen erheblichen Widerstand bewirkt. Insbesondere kommen auch die überhängenden und hinterschnittenen Flankenabschnitte 11 mit dem Muttergewinde in Eingriff, die eine widerhakenartige Sperrung ergeben.

## Patentansprüche

1. Selbstsperrende Schraube mit partieller Verformung von Gewindegängen, wobei mindestens ein Gewindegang gegenüber der Schraubenlinie des Gewindes eine abbrechende Versetzung einer Flanke und der Kantenlinie aufweist, dadurch gekennzeichnet, daß zwei benachbarte Gewindegänge gegensinnig zueinander jeweils eine linear zunehmende Versetzung der Flanken (10, 11) aufweisen, wobei der Abstand der Kantenlinien (8) entgegen der Einschraubrichtung zunimmt.

2. Selbstsperrende Schraube nach Anspruch 1, dadurch gekennzeichnet, daß das Versetzungsprofil der Kantenlinie (8) einen sägezahnartigen Verlauf hat.

3. Selbstsperrende Schraube nach Anspruch 1 oder 2, dadurch gekennzeichnet, daß die jeweils einander zugewandten Flanken (10) der Verformungen (7) gegenüber dem normalen Flankenverlauf abgeflacht und die jeweils äußeren Flanken (11) der Verformungen aufgesteilt sind.

4. Selbstsperrende Schraube nach Anspruch 3, dadurch gekennzeichnet, daß die äußeren Flanken (11) der Verformungen (7) in dem Bereich vor dem Abbruch (9) der Versetzung einen Überhang aufweisen.

## Claims

1. Self-locking screw with partial deformation of thread turns, at least one thread turn having, with respect to the screw line of the thread, a terminating offset of a flank and the edge line, characterized in that two adjacent thread turns respectively have in opposite directions to one another a linearly increasing offset of the flanks (10, 11), with the spacing of the edge lines (8) increasing in opposition to the direction of screwing in.

2. Self-locking screw according to Claim 1, characterized in that the offset profile of the edge line (8) has a sawtooth-type profile.

3. Self-locking screw according to Claim 1 or 2, characterized in that the mutually facing flanks (10) of the deformations (7) are flattened off with respect to the normal flank profile and the respectively outer flanks (11) of the deformations are made more steep.

4. Self-locking screw according to Claim 3, characterized in that the outer flanks (11) of the deformations (7) have an overhang in the region before the termination (9) of the offset.

## Revendications

1. Vis à blocage automatique présentant une déformation partielle de filets, dans laquelle au moins un filet présente par rapport à l'hélice du filet un décalage cassant d'un flanc et de la ligne d'arête, caractérisée en ce que deux filets voisins présentent en sens opposés l'un par rapport à l'autre respectivement un décalage des flancs (10, 11) qui augmente linéairement, la distance des lignes d'arête (8) augmentant à l'opposé du sens de vissage.

2. Vis à blocage automatique suivant la revendication 1, caractérisée en ce que le profil de décalage de la ligne d'arête (8) présente une allure en dents de scie.

3. Vis à blocage automatique suivant l'une ou l'autre des revendications 1 et 2, caractérisée en ce que les flancs (10) des déformations (7) orientés respectivement l'un vers l'autre sont aplatis par rapport à l'allure normale de flancs et en ce que les flancs respectivement externes (11) des déformations sont dressés.

4. Vis à blocage automatique suivant la revendication 3, caractérisée en ce que les flancs externes (11) des déformations (7) présentent un surplomb dans la zone avant la rupture (9) du décalage.

Fig. 2

Fig.1